# EUROPÄISCHE PATENTANMELDUNG

(11) **EP 1 110 916 A1**
(43) Veröffentlichungstag der Anmeldung: **27.06.2001**
(21) Anmeldenummer: 99890398.3
(22) Anmeldetag: 21.12.1999
(51) Int. Cl.: C02F 3/12

(54) **Verfahren zur biologischen Abwasserreinigung**

(71) Anmelder: Ingerle, Kurt Dipl.-Ing., 6091 Götzens (AT)
(72) Erfinder: Ingerle, Kurt Dipl.-Ing., 6091 Götzens (AT)
(74) Vertreter: Matschnig, Franz, Dipl.-Ing.

(57) **Zusammenfassung**

Die vorliegende Erfindung betrifft ein Verfahren zur biologischen Reinigung von Abwasser mit Hilfe von Belebtschlamm, bei dem das Abwasser zunächst in ein belüftbares Belebungsbecken (B-Becken) und anschließend abwechselnd in eines von mehreren mit dem Becken hydraulisch ständig vorbundenen Sedimentations- und Umwälzbecken (SU-Becken) eingeleitet wird, in denen eine Trennung von Belebtschlamm und Klarwasser erfolgt und nach der Trennung Belebtschlamm in das B-Becken zurückgeführt und Klarwasser abgezogen wird, und wobei in den SU-Becken mehrmals am Tag ein Betriebszyklus abläuft, der eine Rührphase (R-Phase), eine Vorabsetzphase (V-Phase) und eine Abzugsphase (A-Phase) aufweist. In der R-Phase der Belebtschlamm wieder mit dem Wasser vermischt wird, in der V-Phase der Belebtschlamm sedimentiert wird und in der A-Phase Klarwasser abgezogen wird (Einbeckentechnologie). Die Zyklen in den SU-Becken sind phasenverschoben und die A-Phasen grenzen aneinander, sodaß nur in den A-Phasen die SU-Becken durchströmt werden, ein annähernd konstanter Wasserspiegel vorhanden ist und somit ein dem Kläranlagenzulauf entsprechender Kläranlagenablauf entsteht (Durchflußprinzip). Noch vor der R-Phase wird sedimentierter, eingedickte Belebtschlamm vom SU-Becken ins B-Becken rückgeführt.

## Beschreibung

Die vorliegende Erfindung betrifft ein Verfahren zu biologischen Reinigung von kommunalem oder ähnlichem Abwasser mit Hilfe von Belebtschlamm, nach dem Oberbegriff des Anspruches 1.

Bei den herkömmlichen nach dem Belebungsverfahren arbeitenden Kläranlagen wird in einem biologischen Reaktor, dem Belebungsbecken, organische Substanz in Belebtschlamm umgewandelt. Im anschließenden Nachklärbecken sedimentiert der Belebtschlamm und das Klarwasser kann abgezogen werden. Zur Aufrechterhaltung des Prozesses muß der in der Nachklärung sedimentierte Belebtschlamm wieder in das Belebungsbecken zurückgepumpt werden. Daß die biochemischen Prozesse und die Sedimentation in verschiedenen Becken erfolgen und der Belebtschlamm im Kreis geführt wird, ist für das Verfahren wesentlich.

In der Einbeckentechnik laufen während eines Zyklus in einem Becken die verschiedenen biochemischen und physikalischen Vorgänge ab. In der Rührphase (R) - falls diese vorhanden ist - wird denitrifiziert und biologisch Phosphor entfernt. In der Belüftungsphase (B) wird organische Substanz abgebaut und zusätzlich nitrifiziert. In der Vorabsetzphase (V) läuft ein Doppelprozeß ab: Einerseits setzt sich der Schlamm ab und andererseits wird bei diesem Prozeß gleichzeitig denitrifiziert. Der sich absetzende Schlamm bildet einen Filterkörper, der auch kleine Belebtschlammflocken aus dem Klarwasser herausfiltert und somit einen guten Kläranlagenablauf garantiert. Schließlich dient die Abzugsphase (A) dem Abzug von Klarwasser aus dem Klärbecken. Auch während dieser Phase sinkt der Schlamm weiter zu Boden und ist in der Lage zu denitrifizieren. Ist das für die Denitrifikation erforderliche Nitrat aufgebraucht, kann auch eine biologische Phosphorelimination erzielt werden. Reicht die biologische Phosphorelimination nicht aus, so muß ein entsprechendes Fällungsmittel in das Klärbecken eingebracht werden. Das Fällungsmittel dient dann nicht nur der Phosphorelimination, sondern hat auch sehr positive Auswirkungen auf die Absetzeigenschaften des Schlammes.

Aus der **Europäischen Patentanmeldung 98111970.4** ist ein Verfahren zur biologischen Reinigung von Abwasser mit Hilfe von Belebtschlamm bekannt, bei dem das Abwasser zunächst in ein belüftbares Belebungsbecken und anschließend in ein Sedimentationsbecken eingeleitet wird, in dem eine Trennung von Belebtschlamm und Klarwasser erfolgt und nach Trennung Belebtschlamm in das Belebungsbecken zurückgeführt und Klarwasser abgezogen wird. Mehrmals am Tag läuft ein Betriebszyklus im Sedimentationsbecken ab, der eine Rührphase, eine Vorabsetzphase und eine Abzugsphase aufweist, wobei in der Rührphase der Belebtschlamm wieder mit dem Wasser vermischt wird, in der Vorabsetzphase der Belebtschlamm sedimentiert wird und in der Abzugsphase Klarwasser gezogen wird.

Gemäß dem Verfahren des Standes der Technik erfolgt die Reinigung in einem biologischen Zweibeckensystem - dem Belebungs- und dem Sedimentationsbecken mit ständigem Zufluß und intermittierenden Abfluß. In der abflußlosen Zeit steigt der Wasserspiegel durch den Zufluß an (Aufstauprinzip). Der Patentanspruch dieses Verfahrens besteht darin, daß nach der Vorabsetzphase und vor der Rührphase sedimentierter Belebtschlamm in das Belebungsbecken des "Zweibeckensystems mit Aufstaubetrieb" rückgeführt wird.

Daß es sich bei diesem Verfahren um einen Aufstaubetrieb handelt, geht auch aus der Beschreibung (S 14 und 15) hervor, wo angeführt ist: ,,...., daß dem ersten Bereich ständig Wasser zugeführt wird und auch von dort in den zweiten Bereich überläuft. Ein Ablauf von geklärtem Abwasser erfolgt hier nur während des dritten Verfahrensschrittes. Während der anderen Verfahrensschritte staut sich das Abwasser in den beiden Bereichen oder - bei Vorhandensein einer anaeroben Vorbehandlung - auch in diesem Bereich auf". Auch im Patentanspruch 13 ist klar ersichtlich, daß es sich um "Zweibeckensysteme mit Aufstaubetrieb" handelt, die "parallel geschaltet sind und zeitversetzt betrieben werden".

Dieses Verfahren des Standes der Technik eignet sich sehr gut für kleine Kläranlagen. Für mittlere und große Kläranlagen ist aber weit besser, das Durchflußprinzip anzuwenden. Der Kläranlagenablauf entspricht dann dem Kläranlagenzufluß.

Aus der **WO97/08104** ist ein ähnliches Verfahren bekannt, bei dem zu Beginn eines jeden Zyklus im Belebungs- und Sedimentationsbecken die gleiche Schlammkonzentration eingestellt wird, indem die Rückführung des nicht sedimentierten Belebtschlammes während der Rührphase erfolgt. Eine Rückführung von sedimentierten und gut eingedicktem Belebtschlamm **vor der Rührphase** ist nicht vorgesehen.

Im **US-Patent 5,902,484** vom 11.05.1999 ist ebenfalls ein ähnliches Verfahren bekannt, bei dem die Schlammrückführung vom Sedimentationsbecken in das Belebungsbecken während der Mischperiode (B- und R-Phase) erfolgt. Wesentlich ist auch hier, daß kein sedimentierter und eingedickter Belebtschlamm zur Rückführung kommt, dadurch längere Zeit für die Rückführung benötigt wird und somit ein Zeitverlust für die anderen Phasen entsteht (siehe Patentanspruch 1).

Der vorliegenden Erfindung liegt die Aufgabe zugrunde, die eingangs beschriebenen Verfahren zur biologischen Abwasserreinigung derart zu verbessern, daß eine Anwendung für mittlere und große Kläranlagen durch die Verwendung des Durchflußprinzips ermöglicht wird und gleichzeitig eine höhere Schlammkonzentration im Belebungsbecken bei kürzerer Rückführzeit durch die Rückführung von sedimentierten und gut eingedicktem Belebtschlamm erreicht wird. Diese Aufgabe wird durch die Merkmale des Anspruches 1 gelöst.

Die vorliegende Erfindung zeichnet sich dadurch aus, daß zur Erzielung des Durchflußprinzips das Belebungsbecken (B-Becken) hydraulisch ständig mit mehreren Sedimentations- und Umlaufbecken (SU-Becken) verbunden ist, wobei in den SU-Becken mehrmals am Tag ein Betriebszyklus abläuft, der eine Rührphase (R-Phase), eine Vorabsetzphase (V-Phase) und eine Abzugsphase (A-Phase) aufweist. In der R-Phase wird der Belebtschlamm wieder mit dem Wasser vermischt, in der V-Phase der Belebtschlamm sedimentiert und in der A-Phase Klarwasser abgezogen. Die Zyklen in den SU-Becken werden so phasenverschoben, daß die A-Phasen aneinandergrenzen und somit ein dem Kläranlagenzulauf entsprechender Kläranlagenablauf entsteht (Durchflußprinzip). Wesentlich ist dabei, daß noch vor der R-Phase sedimentierter, gut eingedickter Belebtschlamm in das B-Becken rückgeführt wird (S-Phase). Vorteilhafter Weise wird eine hohe Schlammkonzentration im B-Becken und eine kurze Rückführzeit dann erreicht, wenn die Rückförderung erst nach Beendigung der Abzugsphase für geklärtes Wasser (A-Phase) erfolgt.

Die Entnahme des rückzuführenden Belebtschlammes erfolgt zweckmäßiger Weise vom Boden des SU-Becken, da dort die höchste Schlammkonzentration auftritt.

Durch die Rückförderung des sedimentierten Schlammes wird im B-Becken Wasser verdrängt, das wieder ins SU-Becken über eine oberflächennahe Öffnung zurückgeführt wird. Dieses Wasser enthält ebenfalls Belebtschlamm, allerdings mit einer geringeren Konzentration als der rückgeförderte sedimentierte Schlamm. Um diesen Schlammrückfluß vom Belebungsbecken ins Sedimentationsbecken zu minimieren, ist es gemäß der vorliegenden Erfindung zweckmäßig, vor Beginn der Rückförderung des Belebtschlammes die Belüftung im Belebungsbecken zu unterbrechen oder zu drosseln. Dadurch sinkt der durch die Belüftung aufgewirbelte Belebtschlamm bis unter das Niveau der oberflächennahen Öffnung ab und die Schlammkonzentration des verdrängten Wassers wird reduziert.

Die oberflächennahen Öffnungen werden mit Klappen versehen, die sich automatisch öffnen und in der V- und A-Phase verschlossen sind.

Das Rückführen des sedimentierten Schlammes kann mit elektrischen Geräten (Pumpen, Rührwerken) oder mit Drucklufthebern erfolgen.

Das Rühren in der SU-Becken (R-Phase) kann auch auf verschiedene Weise durchgeführt werden. Es kann Luft eingeblasen, es können elektrisch angetriebene Rührwerke eingesetzt und es können Druckluftheber verwendet werden.

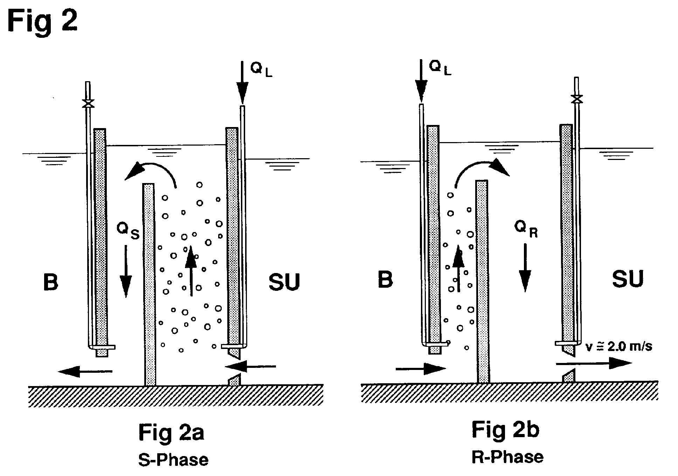

Für das Rückführen des Schlammes und für das Rühren des SU-Beckens kann auch ein kombinierter Druckluftheber gemäß Fig. 2 (Doppelheber) eingesetzt werden. Bei Vorhandensein einer feinblasigen Belüftung für das B-Becken kann man diese abstellen und die dann zur Verfügung stehende Druckluft für den Betrieb des Doppelhebers einsetzen. Wichtig ist dabei, daß für das Rühren ein so starker Wasserstrahl entsteht, der abgelagerten Belebtschlamm aufwirbelt, den Inhalt des SU-Beckens homogenisiert und eventuell gebildeten Schwimmschlamm ins B-Becken transportiert, wo er wieder in den Belebtschlamm eingearbeitet werden kann.

Ein B-Becken kann z.B. mit zwei SU-Becken hydraulisch verbunden und die Zykluszeiten mit ca. 140 Minuten angenommen werden: S-Phase ca. 5'; R-Phase ca. 5'; V-Phase ca. 60' ; A-Phase ca. 70' ; A = S + R + V.

Bei drei SU-Becken ergibt sich ein Zyklus von ca. 105 Minuten: S-Phase ca. 5'; R-Phase ca. 5'; V-Phase ca. 60'; A-Phase ca. 35'; A = (S + R + V) : 2.

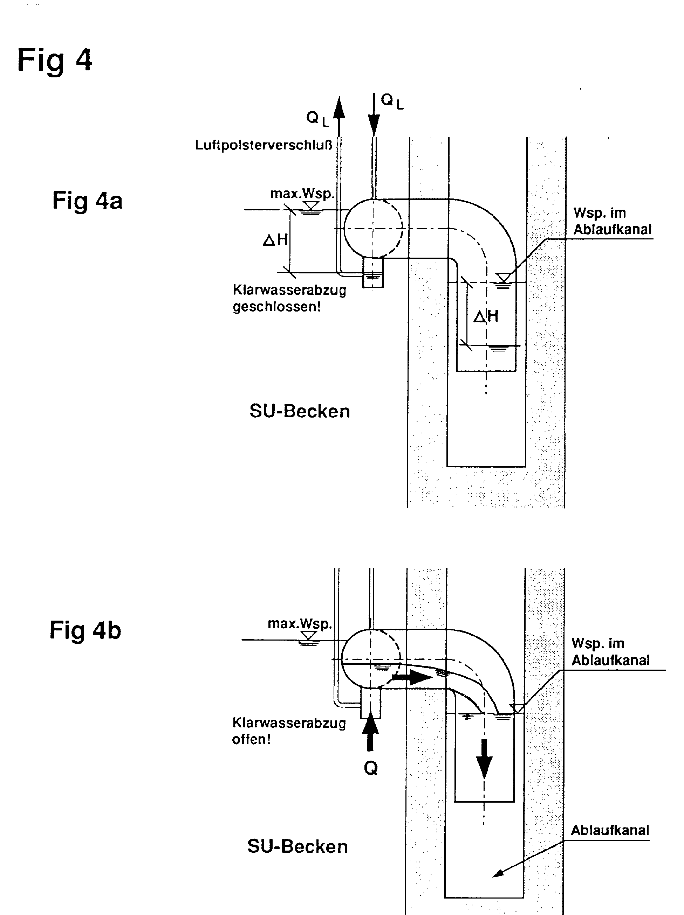

Für den Abzug des Klarwassers hat sich ein fix montierter Druckluftverschluß gut bewährt (Fig4). Für den Überschuß- und Schwimmschlammabzug können auch automatisch wirkende Druckluftheber eingesetzt werden.

Weitere Einzelheiten der vorliegenden Erfindung ergeben sich aus der nachfolgenden Beschreibung unter Bezugnahme auf die Zeichnung. Darin zeigt:
- Fig. 1:: Eine schematische Darstellung der einzelnen Phasen während eines Zyklus
- Fig. 2:: Eine schematische Darstellung eines Doppelhebers für den Flüssigkeitstransport in beiden Richtungen
- Fig. 3:: Eine schematische Darstellung der einzelnen Phasen während eines Zyklus bei Einsatz eines Doppelhebers
- Fig. 4:: Eine schematische Darstellung eines Klarwasserabzuges (Druckluftverschluß).

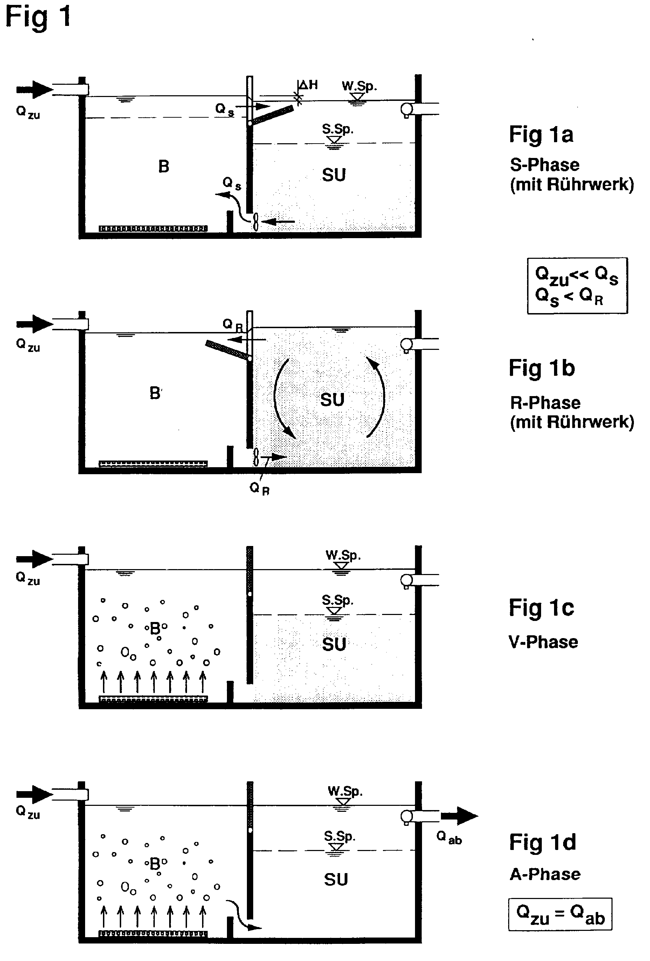

Dle Figuren 1a bis d zeigen schematische Darstellungen den Phasen S, R, V und A. Der Vertikalschnitt in Fließrichtung wird durch das 8-Becken und durch eines der mindestens zwei SU-Becken geführt. Dem ständigen Zufluß steht nur ein Abfluß in der A-Phase gegenüber. Die S- und R-Phase wird in dieser Darstellung mit Rührwerken betrieben. Die oberflächennahen Öffnungen sind In den V- und A-Phase geschlossen. Mit B wird das Belebungsbecken und mit SU die Sedimentations- und Umlaufbecken bezeichnet. Dem ständigen Zufluß Q_{zu} steht nur in der A-Phase ein Abfluß Q_{ab} gegenüber (siehe Fig. 1d). In Fig. 1a ist die S-Phase schematisch dargestellt. Elngedickter Schlamm Q_{S} wird in diesem Fall mit Hilfe eines Rührwerkes vom SU-Becken Ins B-Becken durch eine bodennahe, ständig offene Öffnung gefördert und die gleiche Menge Q_{S} fließt über oberflächennahe Öffnungen vom B-Becken ins SU-Becken zurück. Durch diese Flüssigkeitsförderung steigt der Wasserspiegel im B-Becken um ΔH gegenüber dem SU-Becken an. Die strichlierten Linien im B- und SU-Becken bezeichnen die jeweilige Höhe des Schlammsplegels. Dle Fördermenge Q_{S} ist wesentlich kleiner als die Zuflußmenge Q_{zu}. Anstatt eines Rührwerkes kann auch z.B. ein Druckluftheber wie in Fig. 2 dargestellt, eingesetzt werden. Die Fig. 1b stellt die Rührphase dar. Mit Hilfe eines Rührwerkes wird in diesem Fall ein starker Flussigkeitsstrom Q_{R} erzeugt, der den Inhalt des SU-Beckens aufwirbelt und homogenisiert. Ein gleich großer Strom gelangt über die oberflächennahen Öffnungen vom SU-Becken ins B-Becken. Der Wasserspiegel Im SU-Becken steigt gegenüber dem Wasserspiegel im B-Becken entsprechend an. In Fig. 1c sieht man die V-Phase. Während Im SU-Becken der Schlamm sedimentlert und einen geschlossenen Schlammspiegel bildet, wird im B-Becken in diesem Fall mit feinblasiger Druckluft belüftet. Auch die oberflächennahen Öffnungen sind geschlossen. Schließlich zeigt Fig. 1d die A-Phase, in der ein dem Zufluß Q_{zu} entsprechender Abfluß Q_{ab} stattfindet. Die oberflächennahen Öffnungen sind geschlossen. Durch die am Beckenboden ständig offene hydraulische Verbindung strömt eine dem Zufluß Q_{zu} entsprechende Flüssigkeitsmenge, bestehend aus Schlamm und Wasser, dem SU-Becken zu.

In Fig. 2 ist schematisch ein Doppelheber dargestellt. Fig. 2a zeigt den Betrieb in der S-Phase und ir Fig. 2b in der R-Phase. In Fig. 2a wird vom SU-Becken durch Einbringen von Druckluft Q_{L} (die Luftbläschen sind dargestellt) eine Flüssigkeitsmenge Q_{S} vom SU-Becken ins B-Becken befördert. In Fig. 2b wird ein entgegengesetzter Flüssigkeitsstrom vom B-Becken in das SU-Becken erzeugt, wobei Q_{R} größer als Q_{S} ist. Wesentlich Ist auch, daß der Flüssigkeitsstrom Q_{R} mit einer so großen Fließgeschwindigkelt ins SU-Becken eintritt (v ≈ 2,0 m/s), daß Schlammablagerungen am Boden aufgewirbelt werden und der Inhalt des SU-Beckens homogenisiert wird.

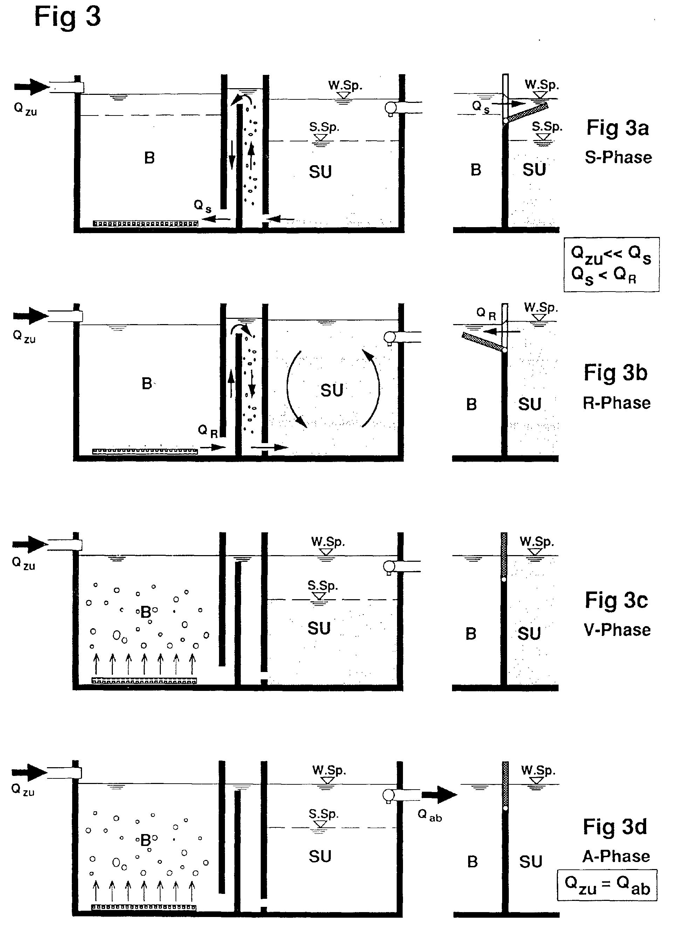

Die Figuren 3a bis d zeigen schematische Darstellungen der Phasen S, R, V und A unter Verwendung des in Fig. 2 beschriebenen Doppelhebers. Seitlich ist der jeweilige Zustand der oberflächennahen Öffnungen mit den Klappen zu sehen. Für die Fig. 3a bis d gilt im wesentlichen auch die Beschreibung der Fig. 1a bis d.

Schließlich zeigt Fig. 4 einen möglichen Klarwasserabzug mit Druckluftverschluß. Im Abstand von ca. 1 m sind vertikal nach unten gerichtete Einzugsstutzen in einem horizontal liegenden Rohr angeordnet. Für die Herstellung des Verschlusses wird Druckluft Q in das horizontale Rohr eingepreßt. Fig. 4a zeigt einen geschlossenen Druckluftverschluß, wobei eine kleine Menge Druckluft Q_{L}, die ständig eingeblasen wird, zur Haltung einer konstanten Wassersplegeldifferenz ΔH durch ein kleines Röhrchen entweicht, Der maximale Wasserspiegel im SU-Becken ist mit "max, Wsp." und der Wasserspiegel im Ablaufkanal mit "Wsp. im Ablaufkanal" bezeichnet. Im Druckluftverschluß herrscht ein der Differenz ΔH entsprechender Luftdruck. In Fig. 4b Ist ein offener Druckluftverschluß dargestellt. Die Abflußmenge beträgt Q. Der Ablaufkanal Ist in diesem Fall ein offenes Gerinne, er könnte auch als Druckrohr ausgebildet werden. Innerhalb und außerhalb des Druckluftverschlusses herrscht der gleiche Luftdruck.

## Patentansprüche

1. Verfahren zur biologischen Reinigung von Abwasser mit Hilfe von Belebtschlamm, bei dem das Abwasser zunächst In ein belüftbares Belebungsbecken (B-Becken) und anschließend abwechselnd in eines von mehreren mit dem Becken hydraulisch ständig verbundenen Sedimentations- und Umwälzbecken (SU-Becken) eingeleitet wird, In denen eine Trennung von Belebtschlamm und Klarwasser erfolgt und nach der Trennung Belebtschlamm in das B-Becken zurückgeführt und Klarwasser abgezogen wird, und wobei in den SU-Becken mehrmals am Tag ein Betriebszyklus abläuft, der eine Rührphase (R-Phase), eine Vorabsetzphase (V-Phase) und eine Abzugsphase (A-Phase) aufweist, wobei in der R-Phase der Belebtschlamm wieder mit dem Wasser vermischt wird, in der V-Phase der Belebtschlamm sedimentlert wird und In der A-Phase Klarwasser abgezogen wird (Einbeckentechnologie) und wobei die Zyklen in den SU-Becken phasenverschoben sind, die A-Phasen aneinander grenzen, nur in den A-Phasen die SU-Becken durchströmt werden, ein annähernd konstanter Wasserspiegel vorhanden ist und somit ein dem Kläranlagenzulauf entsprechender Kläranlagenablauf entsteht (Durchflußprinzip), dadurch gekennzeichnet, daß nach den V-Phasen und noch vor den R-Phasen sedlmentlerter, eingedickter Belebtschlamm von den SU-Becken in das B-Becken rückgeführt wird (S-Phase).

2. Verfahren nach Anspruch 1, dadurch gekennzeichnet, daß die Rückförderung von sedimentiertem Belebtschlamm während oder vorzugswelse nach der A-Phase erfolgt.

3. Verfahren nach Anspruch 1 oder 2, dadurch gekennzeichnet, daß das In der S-Phase lm B-Becken verdrängte Volumen mit geringerer Trockensubstanz als der eingeleitete sedimentierte Belebtschlamm über oberflächennahe Öffnungen in die SU-Becken rückgeführt wird.

4. Verfahren nach Anspruch 3, dadurch gekennzeichnet, daß die oberflächennahen Öffnungen nur einen Durchfluß in der S- und R-Phase erlauben und In der V- und A-Phase verschlossen slnd.

5. Verfahren nach Anspruch 4, dadurch gekennzeichnet daß die oberflächennahen Öffnungen mit Klappen versehen werden, die sich bei den größeren Wassersplegeldifferenzen zwischen dem B- und den SU-Becken während den S- und R-Phasen automatisch öffnen und bei den geringeren Wasserspiegeldifferenzen in den B- und A-Phasen geschlossen bleiben.

6. Verfahren nach einem der Ansprüche 1 bis 5, dadurch gekennzeichnet, daß das Rühren in den SU-Becken (R-Phase) durch Einblasen von Luft erfolgt.

7. Verfahren nach den Ansprüchen 1 bis 6, dadurch gekennzeichnet, daß das Rühren in den SU-Becken (R-Phase) durch elektrisch angetriebene Rührwerke erfolgt.

8. Verfahren nach den Ansprüchen 1 bis 7, dadurch gekennzeichnet, daß das Rückführen des sedimentierten und eingedickten Belebtschlammes in der S-Phase durch Druckluftheber erfolgt.

9. Verfahren nach den Ansprüchen 1 bis 8, dadurch gekennzeichnet, daß das Rückführen des sedlmentierten und eingedickten Belebtschlammes in der S-Phase mit elektrisch angetriebenen Rührwerken erfolgt.

10. Verfahren nach den Ansprüchen 1 bis 9, dadurch gekennzeichnet, daß für das Rückführen des sedimentlerten Belebtschlammes und für das Rühren im SU-Becken (S- und R-Phase) ein kombinierter Druckluftheber (Doppelheber) eingesetzt wird, der einen Flüssigkeitstransport in beiden Richtungen erlaubt und die ständige bodennahe hydraulische Verbundenheit In den V- und A-Phasen zwischen dem B-Becken und den SU-Becken herstellt, wobei der Rühreffekt in den SU-Becken durch Erzeugen eines kräftigen Wasserstrahles entsteht, der am Boden abgelagerten Belebtschlamm aufwirbelt, der eine Wasserwalze mit homogenlslerender Wirkung erzeugt und der eventuell entstehenden Schwimmschlamm über die oberflächennahen Öffnungen in das B-Becken transportiert.

11. Verfahren nach den Ansprüchen 1 bis 10, dadurch gekennzeichnet, daß für die Belüftung felnblasige Druckluft verwendet wird.

12. Verfahren nach den Ansprüchen 1 bis 11, dadurch gekennzeichnet, daß die Belüftung des B-Beckens in den R-Phasen unterbrochen wird.

13. Verfahren nach den Ansprüchen 1 bis 12, dadurch gekennzeichnet, daß die Belüftung des 3-Beckens in den S-Phasen unterbrochen wird.

14. Verfahren nach den Ansprüchen 1 bis 13, dadurch gekennzeichnet, daß ein B-Becken mit zwei SU-Becken hydraulisch verbunden wird und die Zykluszeiten mit ca. 140 Minuten (S-Phase ca. 5'; R-Phase ca. 5'; V-Phase ca. 60'; A-Phase ca. 70'; A = (S + R + V) ; gewählt werden.

15. Verfahren nach den Ansprüchen 1 bis 14, dadurch gekennzeichnet, daß ein B- Becken mit drei SU-Becken hydraulisch verbunden wird und die Zykluszeiten mit ca. 105 Minuten (S-Phase ca. 5'; R-Phase ca. 5'; U-Phase ca. 60'; A-Phase ca. 35'; A = (S + R + V) : 2) gewählt werden.

16. Verfahren nach den Ansprüchen 1 bis 15, dadurch gekennzeichnet, daß der Ablauf des Klarwassers durch einen ca. 20 bis 50 cm unter dem Wasserspiegel fix angeordneten Abzug erfolgt.

17. Verfahren nach den Ansprüchen 1 bis 16, dadurch gekennzeichnet, daß der Abzug als Druckluftverschluß gemäß Fig. 4 ausgebildet ist.

18. Verfahren nach den Ansprüchen 1 bis 17, dadurch gekennzeichnet, daß am Ende der V-Phase in einer vorgegebenen Tiefe von ca. 1,0 bis 1,5 m unter dem Wasserspiegel die Schlammkonzentration gemessen und am Ende der A-Phase eingedickter Überschußschlamm kurzzeitig (wenige Minuten) abgezogen wlrd, wenn die Messung der Schlammkonzentration einen über der Moßstelle liegenden Schlammspiegel ergeben hat.
